# EUROPÄISCHE PATENTSCHRIFT

(11) **EP 1 662 094 B1**
(45) Veröffentlichungstag und Bekanntmachung des Hinweises auf die Patenterteilung: **13.07.2016**
(21) Anmeldenummer: 05016850.9
(22) Anmeldetag: 03.08.2005
(51) Int. Cl.: F01D 17/16, F02C 6/12

(54) **Leitapparat für einen Abgasturbolader sowie Abgasturbolader**
Vane assembly for a turbocharger and turbocharger
Distributeur pour un turbocompresseur et turbocompresseur

(30) Priorität: 30.11.2004 DE 102004057864
(43) Veröffentlichungstag der Anmeldung: 31.05.2006
(73) Patentinhaber: BorgWarner, Inc., Auburn Hills, MI 48326-2872 (US)
(72) Erfinder: Hemer, Hans-Josef, 67550 Worms (DE)
(74) Vertreter: Westphal, Mussgnug & Partner Patentanwälte mbB

(56) Entgegenhaltungen:
- EP-A- 1 357 255
- EP-A1- 0 378 343
- EP-A2- 0 227 475
- US-A- 2 860 827

## Beschreibung

Die Erfindung betrifft einen Leitapparat mit variabler Turbinengeometrie gemäß dem Oberbegriff des Patentanspruchs 1, einen Abgasturbolader mit einem solchen Leitapparat nach dem Oberbegriff des Patentanspruchs 5, wie beispielsweise aus der US 2,860,827 A bekannt.

Bei Turbomaschinen, in denen die Turbine zum Antrieb eines Kompressors oder Laders dient, ist es oft von Vorteil, den Abgasstrom in die Turbine zu regeln, um den Wirkungsgrad, das Ansprechverhalten oder den Betriebsbereich zu verbessern. Dies kann insbesondere durch eine variable Geometrie der zum Turbinenrad führenden Düsenkanäle erreicht werden. Diese Düsenkanäle mit variabler Geometrie können über einen Ring von Leitschaufeln gebildet werden, die drehbar gelagert sind, um auf diesem Weg die zwischen ihnen liegenden Kanäle unterschiedlich einstellen zu können. Die Ausführung der in Verbindung mit den schwenkbaren Schaufeln verwendeten Verstelleinrichtung ist entscheidend, um ein Verklemmen der Verstelleinrichtung oder der Schaufeln zu verhindern.

Die US 2,860,827 und die US 4,179,247 zeigen Vorschläge zur Verhinderung einer Blockierung der Verstelleinrichtung für die schwenkbaren Schaufeln. Keiner der beiden Konstruktionen ist jedoch für solche Temperaturschwankungen im Turbinengehäuse oder der Komponenten der Verstelleinrichtung geeignet, wie sie in modernen Verbrennungskraftmaschinen auftreten. Darüber hinaus ist insbesondere die Lagerung der US 4,179,247 vergleichsweise kompliziert im Zusammenbau.

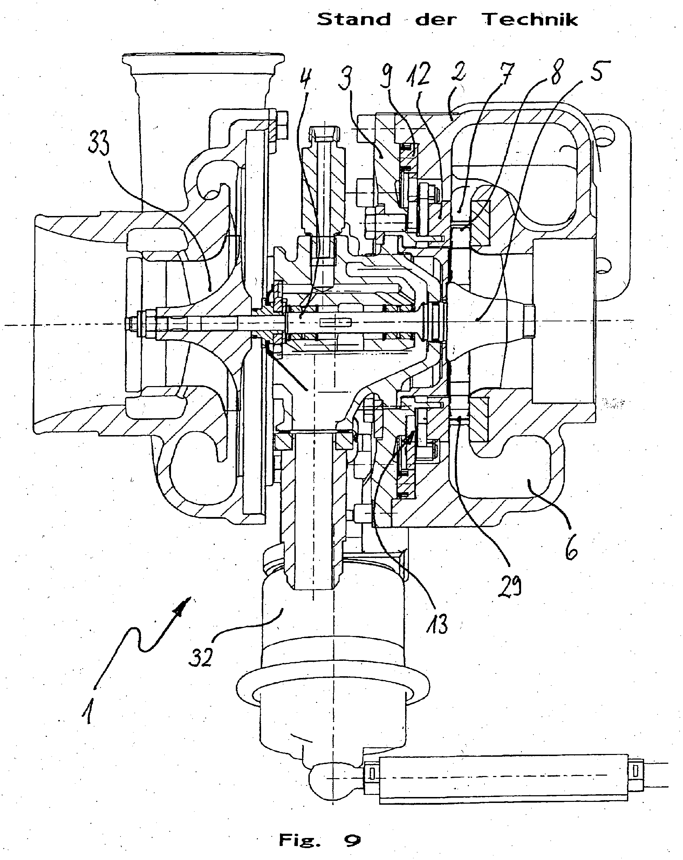

Aus dem betriebsinternen Stand der Technik ist ein Abgasturbolader mit variabler Turbinengeometrie bekannt. Dieser ist in diversen perspektivischen Ansichten in den Figuren 9 bis 12 dargestellt.

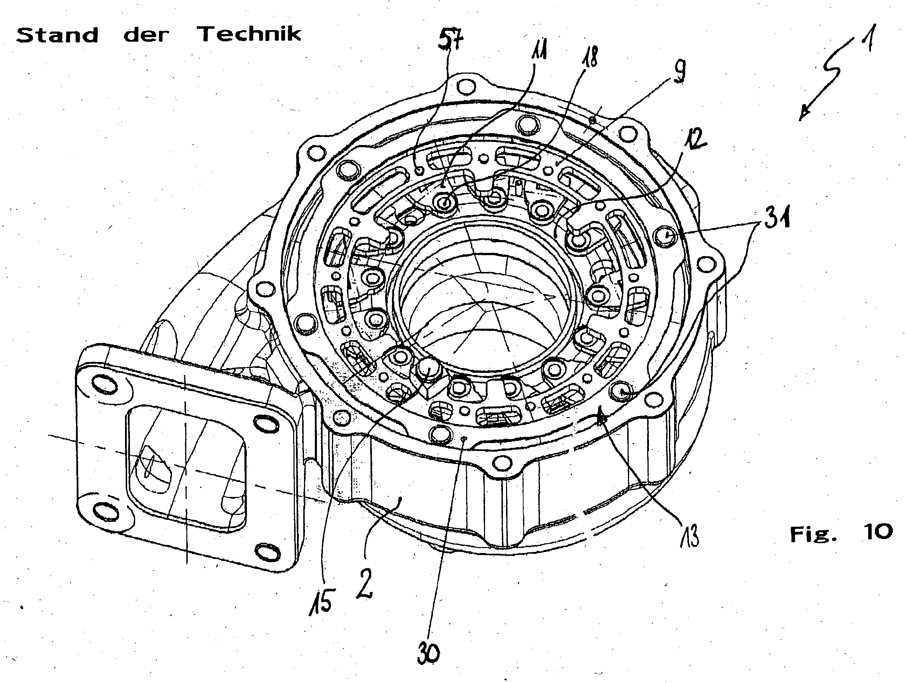

Der grundsätzliche Aufbau dieses Abgasturboladers gemäß dem betriebsinternen Stand der Technik ergibt sich aus der Figur 9. Für das Verständnis der nachfolgend beschriebenen Erfindung wesentliche Einzelkomponenten des Abgasturboladers nach der Figur 9 ergeben sich aus den Figuren 10 bis 12.

Der beispielhaft dargestellte Abgasturbolader 1 gemäß dem betriebsinternen Stand der Technik weist ein aus einem Lagergehäuse 3 und einem Turbinengehäuse 2 bestehendes Gehäuse auf, in welchem eine Welle 4 drehbar gelagert ist. Die Welle 4 trägt an einem Ende ein Verdichterrad 33 und an dem gegenüberliegendem Ende ein Turbinenrad 5. Innerhalb des Turbinengehäuses 2 ist auf der Seite des Turbinenrads 5 eine Volute 6 gebildet, die in radialer Richtung in einen Ringkanal 7 übergeht. Im Ringkanal 7 sind verstellbare Leitschaufeln 8 angeordnet.

Die Leitschaufeln 8 sind an einem Schaufellagerring 12 und an einem mittels Distanzhalter 29 beabstandeten Stütz- und Lagerring 28 drehbar gelagert und werden über einen Aktuator 32 verstellt, der in hier nicht näher dargestellter Art und Weise auf einen Verstellring 9 einwirkt. Eine Drehbewegung des Verstellrings 9 in Bezug auf den Schaufellagerring 12 wird auf die Leitschaufeln 8 übertragen, die auf diese Weise in einem vorgegebenen Drehbereich zwischen einer geöffneten und einer geschlossenen Position verstellt werden können. Die gesamte Verstelleinrichtung inklusive der hierzu gehörenden Komponenten wird in der Fachsprache als Leitapparat 13 bezeichnet.

Die Strömungskanäle des ringförmigen, radial von Auspuffgasen durchströmten Ringkanals 7, werden durch die Zwischenräume zwischen Leitschaufeln 8 gebildet. Die Strömungskanäle sind durch unterschiedliche Winkelstellungen der Leitschaufeln 8 änderbar.

Die Figuren 10 bis 12 zeigen, dass die Leitschaufeln 8 an dem Schaufellagerring 12 mittels Schaufelzapfen 18 befestigt sind, welche den Schaufellagerring 12 durchsetzen, und die an ihren den Leitschaufeln 8 gegenüberliegenden Enden jeweils einen nachfolgend als Schaufelhebel 11 bezeichneten Betätigungsarm tragen.

Der Verstellring 9, der zur gleichzeitigen Betätigung aller Schaufelhebel 11 dient, ist in der darüber liegenden axialen Ebene der kreisförmig angeordneten Schaufelhebel 11 angeordnet. Zum Betätigen aller Schaufelhebel 11 weist der Verstellring 9 an seinem inneren Rand Eingriffsmittel auf, die mit entsprechenden Eingriffsmitteln an jedem der Schaufelhebel 11 derart zusammenwirken, dass bei Verdrehung des Verstellrings 9 in Bezug auf den Schaufellagerring 12 alle Schaufelhebel 11, und mit ihnen die Leitschaufeln 8, gleichzeitig verschwenkt werden.

Der Verstellring 9 trägt als Betätigungsmittel einen mit dem Aktuator 32 in Wirkverbindung stehenden Aktuatorzapfen 15, um den Verstellring 9 von außerhalb des Gehäuses steuern zu können.

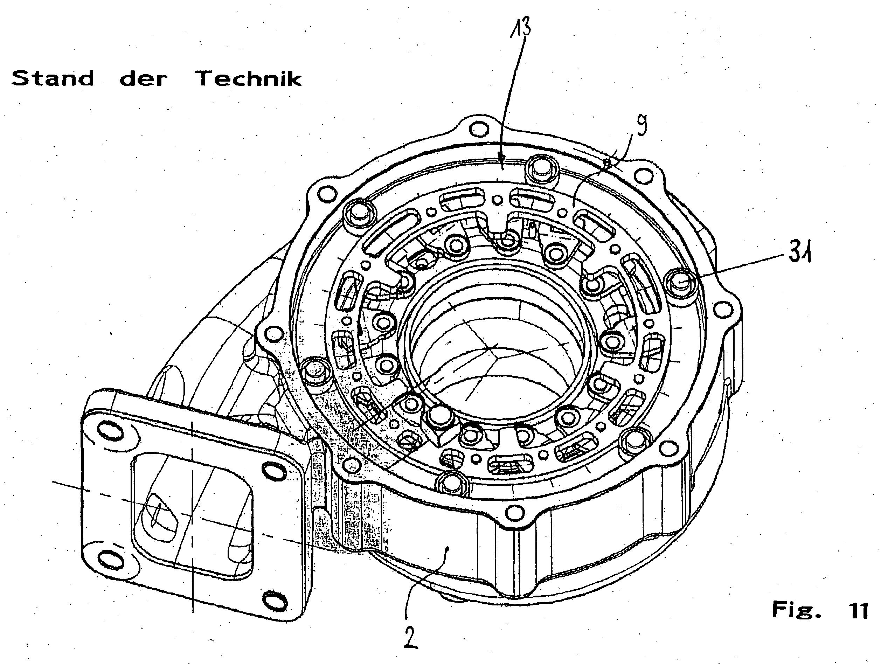

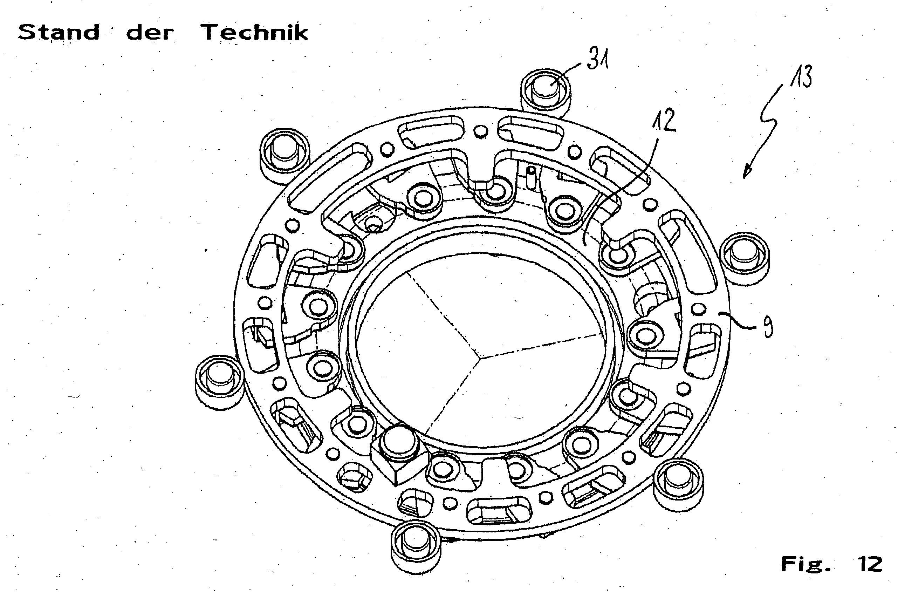

Der Verstellring 9 wird vorliegend, wie sich insbesondere aus den Figuren 11 und 12 ergibt, von sechs Wälzkörpern 31 getragen. Diese dienen zur radialen Führung des Verstellringes 9. Die Wälzkörper 31 werden wiederum von einem sogenannten Käfig 30 in Position gehalten, der im Turbinengehäuse 2 frei drehbar ist. Der Käfig 30 weist Bohrungen auf, in denen die Wälzkörper 31 drehbar gelagert sind.

Diese Anordnung funktioniert in befriedigender Weise, solange keine allzu großen Temperaturschwankungen auftreten. Moderne Abgasturbolader sind jedoch extrem starken Temperaturschwankungen ausgesetzt. So erreichen Turbinenteile und benachbarte Teile Temperaturen von bis zu 900°C. Diese Temperaturschwankungen, zusammen mit den extrem hohen Drehzahlen des Turbinenrades und des Kompressorrades, erzeugen extreme Belastungen für alle Komponenten, und führen zu einem hohen Verschleiß bis hin zu einem Funktionsausfall des gesamten Turboladers.

In diesem Zusammenhang ist es wichtig, dass die geometrische Zuordnung aller zusammenwirkenden Teile, wie Schaufellagerring, Verstellring, Wälzkörper, Schaufelzapfen, Aktuatorzapfen etc. soweit konstant gehalten werden kann, dass die Verstellung der Leitschaufeln unter allen Temperatur- und Betriebsbedingungen stets gegeben ist.

Aus der EP 1 357 255 A1, ist ein Abgasturbolader mit einem Leitapparat mit einem Ring verstellbarer Leitschaufeln bekannt. Die Leitschaufeln sind mittels Schaufelzapfen an einem Schaufellagerring schwenkbar gelagert. Die Schaufelzapfen durchsetzen den Schaufellagerring axial. Sie sind einendseitig drehfest mit einer jeweiligen Leitschaufel und andersendseitig drehfest mit einem Schaufelhebel verbunden.

Um den Verschleiß bei großen Temperaturschwankungen bei gleichzeitig einfacher konstruktiver Ausführung gering zu halten schlägt die EP 1 357 255 A1 vor, den Verstellring über die Schaufelhebel radial abzustützen. In einer bevorzugten Ausführungsvariante weisen die Schaufelhebel axiale Ansätze auf, die die radiale Lagerfunktion übernehmen. In diesem Falle ist eine Wälzbewegung zwischen dem Verstellring und den radialen Lagerflächen der Ansätze gegeben.

Obwohl sich diese Art der radialen Abstützung des Verstellrings an axialen Ansätzen der Schaufelhebel dem Grund nach bewährt hat, besteht weiterer Verbesserungsbedarf.

Aus der EP 0227 475 A2, die einen Leitapparat mit abweichendem Lagerkonzept zeigt, sind Kulissensteine als Eingriffsmittel bekannt.

Der Erfindung liegt nunmehr die Aufgabe zugrunde, einen Abgasturbolader der Eingangs genannten Art mit zugehörigem Leitapparat zur Verfügung zu stellen, der unter allen Betriebsbedingungen eine zuverlässige Betätigung der Leitschaufeln ermöglicht. Weiterhin soll ein für einen derartigen Leitapparat geeigneter Schaufelhebel bereitgestellt werden.

Gelöst wird diese Aufgabe durch einen Leitapparat, der die Merkmale des Patentanspruchs 1 aufweist. Weiterhin wird diese Aufgabe durch einen Abgasturbolader mit den Merkmalen des Patentanspruchs 5 gelöst.

Vorteilhafte Ausführungsvarianten und Weiterbildungen der Erfindung sind durch die Merkmale der Unteransprüche beschrieben.

Ein Leitapparat gemäß der Erfindung umfasst demgemäss einen Ring von Leitschaufeln. Die Leitschaufeln sind mittels Schaufelzapfen an einem Schaufellagerring drehbar gelagert, indem z.B. die Schaufelzapfen den Schaufellagerring axial durchsetzen. Die Schaufelzapfen sind jeweils verdrehfest mit einem Schaufelhebel verbunden. Die Schaufelhebel weisen Schaufelhebeleingriffsmittel auf, welche mit korrespondierenden Verstellringeingriffsmitteln eines gegenüber dem Schaufellagering drehbaren Verstellrings derart in Wirkverbindung stehen, dass bei Verdrehung des Verstellrings in Bezug auf den Schaufellagerring alle Schaufelhebel, und mit ihnen die Leitschaufeln, gleichzeitig verdreht werden.

Die Erfindung basiert zum Einen auf der Idee, den Verstellring in radialer Richtung unmittelbar an den Schaufelhebeln abgestützt zu lagern und damit auf eine separate Lagerung in Form vom Zapfen, Stiften, Rollen, Wälzlagern oder dergleichen vollständig zu verzichten. Die Abstützung und Lagerung des Verstellrings erfolgt dabei an axialen, kreisbogenförmig gekrümmten Ansätzen an mehreren der Schaufelhebel. Am günstigsten ist es selbstverständlich, wenn sämtliche Schaufelhebel einen derartigen axialen Ansatz aufweisen. Die Lagerung und Abstützung durch die Ansätze erfolgt durch zumindest im Bereich der Abstützung kreisförmig gekrümmten Innenrand des Verstellrings an einer entsprechenden Krümmung des jeweiligen axialen Ansatzes der Schaufelhebel.

Hierdurch ergibt sich ein vereinfachter Aufbau des Leitapparates mit Verstellring, der zu einer erhöhten Montage- und Funktionssicherheit im Betrieb führt.

Die Erfindung sieht zum Anderen vor, dass wenigstens eines der Schaufelhebeleingriffsmittel einen in einen Kulissenstein eingreifenden Hebelzapfen aufweist, auf welchem der Kulissenstein vorzugsweise drehbar gelagert ist, und dass das zu diesem wenigstens einen Schaufelhebeleingriffsmittel korrespondierende Verstellringeingriffsmittel eine Ausnehmung aufweist, in welcher der Kulissenstein verschieblich, nämlich vorzugsweise radial verschieblich, geführt ist.

Als alternative Ausführungsform kommt eine Anordnung in Betracht, bei der wenigstens eines der Verstellringeingriffsmittel einen in einen Kulissenstein eingreifenden Verstellringzapfen aufweist und bei der das zu diesem wenigstens einen Verstellringeingriffsmittel korrespondierende Schaufelhebeleingriffsmittel eine Ausnehmung aufweist, in welcher der Kulissenstein verschieblich geführt ist.

Es versteht sich für den Fachmann von selbst, dass bei ein und demselben Abgasturbolader bzw. Leitapparat ein Teil der korrespondierenden Schaufelhebeleingriffsmittel/Verstellringeingriffsmittel-Paare nach der erstgenannten Variante und ein Teil der korrespondierenden Schaufelhebeleingriffsmittel/Verstellringeingriffsmittel-Paare nach der zuletzt genannten Art gestaltet sein kann, ohne die Funktion des Leitapparats grundsatzliche zu ändern bzw. gar in Frage zu stellen.

Bei dem Schaufelhebeleingriffsmittel/Verstellringeingriffsmittel-Paar nach der erstgenannten Variante weisen die Schaufelhebel vorzugsweise einen nach radial außen gerichteten Hebelarm auf, von welchem der Hebelzapfen axial absteht (und welcher ggf. als Träger des oben beschriebenen axialen Ansat-. zes dient). Bei dem Schaufelhebeleingriffsmittel/Verstellringeingriffsmittel-Paar nach der zweitgenannten Variante steht der Verstellringzapfen vorzugsweise axial ab. Diese beiden Ausgestaltungen der Erfindung ermöglichen ein von parasitären Kräften weitgehend freies Gleiten der Kulissensteine in den entsprechenden Ausnehmungen.

Im ersten Fall (am Hebelarm axial abstehender Hebelzapfen) erfolgt die axiale Abstützung bzw. Fixierung des Verstellringes zu der einen Seite durch die Schaufelhebel zur Vermeidung eines Flächenkontaktes zum Turbinengehäuse und zur anderen Seite durch das Lagergehäuse. Die seitliche Anlage für (üblicherweise) lose aufgesteckte Kulissensteine bildet in diesem Fall das Lagergehäuse.

Im zweiten Fall (von Verstellring axial abstehender Verstellringzapfen) stützten sich die Kulissensteine vorzugsweise einseitig gegen den Verstellring ab. Um ein Herausfallen der Kulissensteine zu verhindern bedarf es grundsätzlich einer zusätzlichen Fixiereinrichtung.

In einer besonderen Ausführung kann vorgesehen sein, dass die Abstützung des Verstellrings im Fall des Hebelarms mit axial abstehendem Hebelzapfen und auf diesen Hebelzapfen aufgestecktem Kulissenstein nicht bzw. nicht vollständig unmittelbar an dem Lagergehäuse erfolgt sondern mittels wenigstens dreier Scheiben. In diesem Fall ist auf wenigstens drei der Hebelzapfen, vorzugsweise auf allen Hebelzapfen, eine den entsprechenden Kulissenstein einschließende und den Verstellring im Bereich der korrespondierenden Ausnehmung übergreifende Scheibe vorgesehen. Diese Variante ermöglicht es, den gesamten Leitapparat als Kartusche vorzumontieren. Diese Scheiben dienen zusätzlich zur Anlage der Kulissensteine. Bei Verwendung von Scheiben entsprechend der Anzahl der Schaufeln entfällt das Lagergehäuse als Anlagefläche.

In einer besonderen Ausführung kann vorgesehen sein, dass die Anlage und Abstützung des Kulissensteins im Fall des Hebelarms mit axial abstehendem Hebelzapfen (z.B. bei einseitiger Abstützung des Kulissensteins gegen den Hebelarm) und im Fall des Verstellrings mit abstehendem Verstellringzapfen (z.B. bei einseitiger Abstützung des Kulissensteins gegen den Verstellring) andersseitig mittels einer (z.B. bund- oder kopfartigen) Verdickung am Hebelzapfen bzw. am Verstellringzapfen erfolgt, welche darüber hinaus den entsprechenden Kulissenstein verliersicher hält.

Um den gesamten Leitapparat vollständig in Form einer Kartusche vormontieren zu können, hat es sich als günstig erwiesen, einen Stütz-/Lagerring vorzusehen. Die Leitschaufeln sind dabei axial zwischen dem Schaufelllagering und dem Stütz-/Lagerring angeordnet und an diesen drehbar gelagert. Axial zwischen dem Stütz-/Lagerring und dem Schaufelllagerring sind wenigstens drei den Stütz-/Lagerring und den Schaufelllagerring zwangsdistanzierende und zusammen halternde Distanzhalter vorgesehen. Die Distanzhalter sind z.B. mittels Schrauben an dem Stütz-/Lagerring und dem Schaufelllagerring in der vorgesehenen Lage befestigt.

Die Erfindung wird nunmehr Anhand der Zeichnungen näher beschrieben. Gleiche oder funktionsgleiche Bestandteile bzw. Komponenten sind in den Zeichnungen mit identischen Bezugszeichen versehen. Es zeigen:
- Figur 1:: Eine erste Ausführungsvariante eines Abgasturboladers gemäß der Erfindung im Axialschnitt.
- Figur 2:: Den Leitapparat des Abgasturboladers gemäß der Figur 1 in perspektivischer Darstellung.
- Figur 3:: Einen Schaufelhebel für einen Abgasturbolader gemäß der Figur 1 bzw. einen Leitapparat gemäß der Figur 2.
- Figur 4:: Eine weitere Ausführungsvariante eines Leitapparats, welche sich durch geringfügige Modifikation des Leitapparats nach der Figur 2 ergibt.
- Figur 5:: Eine zweite Ausführungsvariante eines Abgasturboladers gemäß der Erfindung im Axialschnitt.
- Figur 6:: Den Leitapparat des Abgasturboladers nach der Figur 5 in perspektivischer Darstellung von der Lagergehäuseseite her betrachtet.
- Figur 7:: Den Leitapparat nach der Figur 6 in perspektivischer Darstellung von der Turbinengehäuseseite her betrachtet.
- Figur 8:: Den Leitapparat nach der Figur 6 bei abgenommenem Verstellring in perspektivischer Darstellung von der Lagergehäuseseite her betrachtet.
- Figur 9:: Einen Abgasturbolader gemäß dem Stand der Technik im Axialschnitt.
- Figur 10:: Den in das Turbinengehäuse eingesetzten Leitapparat des Abgasturboladers nach der Figur 9 in perspektivischer Darstellung von der Lagergehäuseseite her betrachtet.
- Figur 11:: Den in das Turbinengehäuse eingesetzten Leitapparat des Abgasturboladers nach der Figur 9 mit abgenommenem Käfigring in perspektivischer Darstellung von der Lagergehäuseseite her betrachtet.
- Figur 12:: Den Leitapparat des Abgasturboladers nach der Figur 9 bei abgenommenem Käfig in perspektivischer Darstellung von der Lagergehäuseseite her betrachtet.

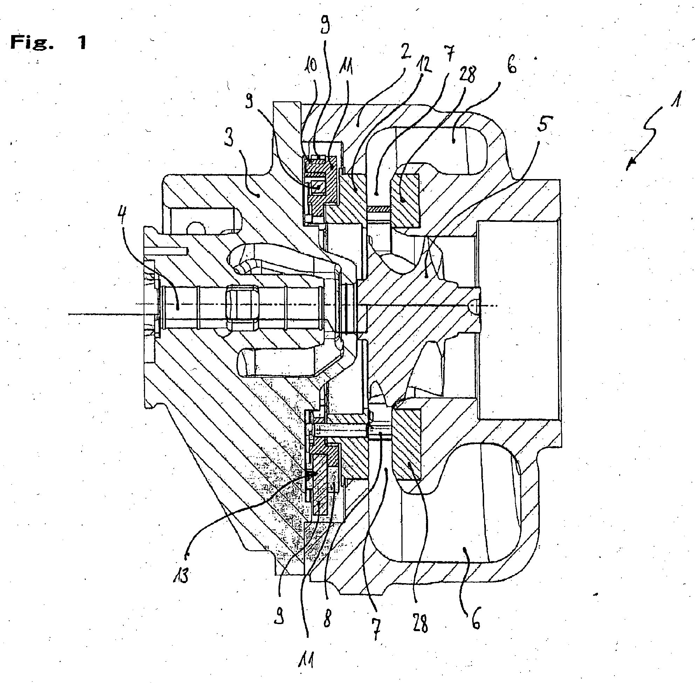

Der grundsätzliche Aufbau eines ersten Ausführungsbeispiels eines Abgasturboladers gemäß der Erfindung ergibt sich aus der Figur 1.

Der dargestellte Abgasturbolader 1 gemäß der Erfindung weist ein Lagergehäuse 3 und ein Turbinengehäuse 2 umfassendes Gehäuse auf, in welchem eine Welle 4 drehbar gelagert ist. Die Welle 4 trägt an einem Ende ein Turbinenrad 5. Innerhalb des Turbinengehäuses 2 ist auf der Seite des Turbinenrads 5 eine Volute 6 gebildet, die in radialer Richtung in einen Ringkanal 7 übergeht.

Der Abgasturbolader 1 umfasst einen Leitapparat 13, welcher es ermöglicht, die Abgaseinströmung in die Turbine durch Änderung der Turbinengeometrie einzustellen. Zu diesem Zweck sind im Ringkanal 7 verstellbare Leitschaufeln 8 angeordnet. Die Strömungskanäle des ringförmigen, radial von Auspuffgasen durchströmten Ringkanals 7, werden durch die Zwischenräume zwischen Leitschaufeln 8 gebildet. Die Strömungskanäle durch unterschiedliche Winkelstellungen der Leitschaufeln 8 änderbar.

Die Leitschaufeln 8 sind an einem Schaufellagerring 12 und an einem mittels (hier nicht dargestellter) Distanzhalter beabstandeten Stütz- und Lagerring 28 drehbar gelagert und werden über einen (hier nicht dargestellten) Aktuator verstellt, der in hier nicht näher dargestellter Art und Weise auf einen Verstellring 9 einwirkt. Eine Drehbewegung des Verstellrings 9 in Bezug auf den Schaufellagerring 12 wird auf die Leitschaufeln 8 übertragen, die auf diese Weise in einem vorgegebenen Drehbereich zwischen der geöffneten und der geschlossenen Position verstellt werden können.

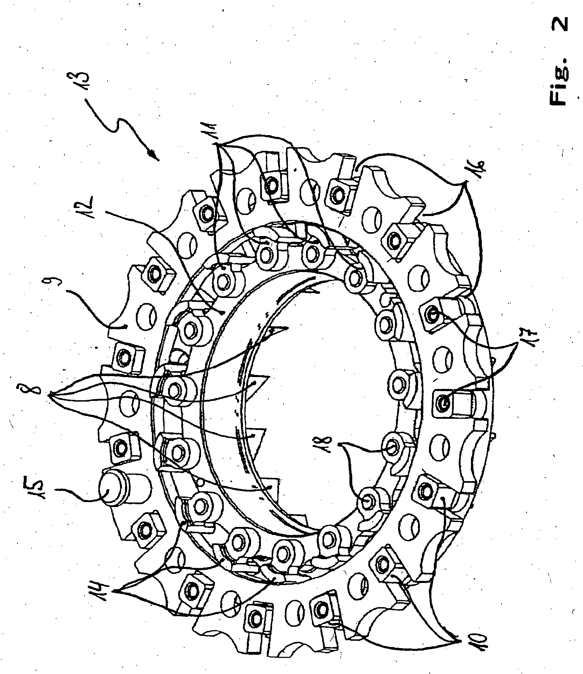

Wie sich aus den Figuren 1 und 2 ergibt, sind die Leitschaufeln 8 an dem Schaufellagerring 12 mittels Schaufelzapfen 18 befestigt, welche den Schaufellagerring 12 axial durchsetzen, und die an ihren den Leitschaufeln 8 gegenüberliegenden Enden jeweils eignen Schaufelhebel 11 tragen.

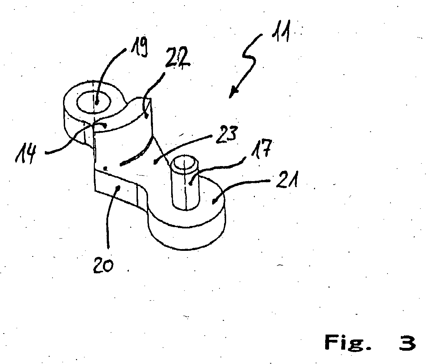

Aus der Figur 3 ergibt sich eine bevorzugte Ausgestaltung eines Schaufelhebels 11. Der dort dargestellte Schaufelhebel 11 weist einen Hebelarm 20 auf, der einendseitig eine Aufnahmebohrung 19 für einen Schaufelzapfen 18 und andersendseitig einen Hebelkopf 21 mit einem im wesentlichen rechtwinklig abstehenden Hebelzapfen 17 aufweist.

Der Verstellring 9, der zur gleichzeitigen Betätigung aller Schaufelhebel 11 dient, ist in der darüber liegenden axialen Ebene der kreisförmig angeordneten Schaufelhebel 11 angeordnet. Die dem Verstellring 9 zugewandte Fläche des Hebelarms 20 dient dabei als Auflage- und axiale Führungsfläche 23 für den Verstellring 9 (vgl. Figur 1).

Um die gleichzeitige Betätigung aller Schaufelhebel 11 zu bewerkstelligen, weist der Verstellring 9 Eingriffsmittel auf, die mit entsprechenden Eingriffsmitteln an jedem der Schaufelhebel 11 derart zusammenwirken, dass bei Verdrehung des Verstellrings 9 in Bezug auf den Schaufellagerring 12 alle Schaufelhebel 11, und mit ihnen die Leitschaufeln 8, gleichzeitig verschwenkt werden. Der Verstellring 9 trägtals Betätigungsmittel einen mit dem Aktuator in Wirkverbindung stehenden Aktuatorzapfen 15, um den Verstellring 9 von außerhalb des Gehäuses steuern zu können (vgl. Figur 2).

Die Eingriffsmittel umfassen im vorliegenden Ausführungsbeispiel entsprechend der Darstellung in der Figur 1 quaderförmige oder würfelförmige Kulissen- oder Gleitsteine 10 mit einer Zentralbohrung 59. In die Zentralbohrung 59 eines jeweiligen Kulissen- oder Gleitsteins 10 ist der Hebelzapfen 17 eines Schaufelhebels 11 gesteckt, so dass eine Seite des Quaders oder Würfels 10 auf der axialen Führungsfläche 23 des Hebelkopfs 21 aufsitzt. Die Kulissen- oder Gleitsteine 10 greifen in entsprechende radial nach außen verlaufende Kulissensteinführungen bildende Ausnehmungen 16 des Verstellrings 9 ein.

Im Ausführungsbeispiel gemäß der Figur 2 überragen die Kulissen- oder Gleitsteine 10 die dem Lagergehäuse 3 zugewandte Seitenfläche des Verstellrings 9 geringfügig in axialer Richtung. Wie sich insbesondere aus der Figur 1 ergibt, erfolgt die axiale Abstützung bzw. Fixierung des Verstellrings 9 zu der einen Seite durch die Schaufelhebel 11, und hierbei insbesondere durch die axiale Führungsfläche 23 des Hebelarms 20, zur Vermeidung eines Flächenkontaktes zum Turbinengehäuse 2 und zur anderen Seite durch das Lagergehäuse 3. Die seitliche Anlagen für die lose aufgesteckten Gleit- oder Kulissensteine 10 bilden die axiale Führungsfläche 23 des Hebelkopfs 21 einerseits und das Lagergehäuse 3 andererseits.

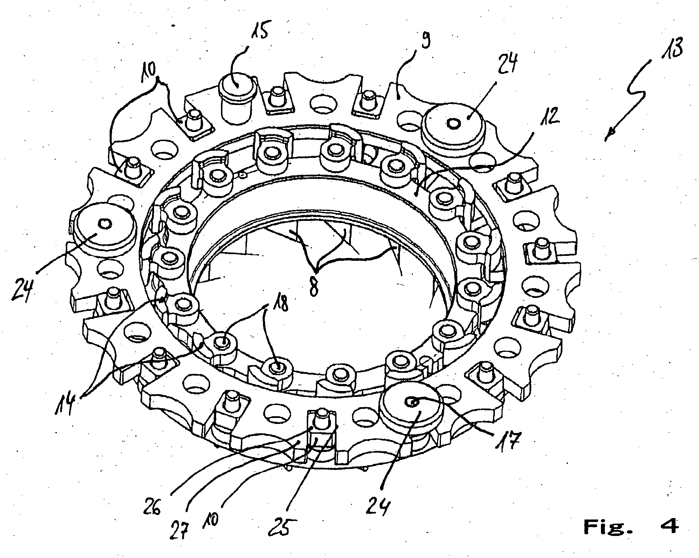

In einer besonders vorteilhaften und in der Figur 4 dargestellten Ausführung eines Leitapparats 13 kann die Abstützung des Verstellrings 9 auch über mindestens drei Scheiben 24 erfolgen, welche zusätzlich zu den lose aufgesteckten Gleit- oder Kulissensteinen 10 auf entsprechende Hebelzapfen 17 dreier (vorzugsweise in gleichen Winkelabständen zueinander angeordneten) Schaufelhebel 11 aufgesteckt sind. Zumindest die drei Gleit- oder Kulissensteine 10 auf deren diese halternde Hebelzapfen 17 die drei (oder mehr) Scheiben 24 aufgesteckt sind, weisen im wesentlichen die gleichen axialen Abmessungen auf wie der Verstellring 9, so dass die entsprechenden Scheiben 24 sowohl formschlüssig auf den entsprechenden Gleit- oder Kulissensteinen 10 als auch auf dem Verstellring 9 unter Berücksichtigung des Axialspieles aufsitzen. Die im vorliegenden Ausführungsbeispiel kreisförmigen Scheiben 24 dienen sowohl als Abstützung des Verstellrings 9 als auch als Anlagefläche für die Gleit- oder Kulissensteine 10. Die komplette in der Figur 4 dargestellte Einheit 13 kann als Kartusche vormontiert werden.

Bei Verwendung von Scheiben 24 entsprechend der Anzahl der Schaufeln 8 entfällt das Lagergehäuse 2 als Anlagefläche.

Bei beiden in den Figuren 2 bzw. 4 dargestellten Ausführungsvarianten ist der Verstellring 9 über die Schaufelhebel 11 in radialer Richtung eine Drehbewegungen des Verstellrings 9 gegenüber dem Schaufellagerring 12 ermöglichende Lagerung für den Verstellring 9 bildend abgestützt. Die Schaufelhebel 11 weisen zu diesem Zweck axiale Ansätze 14 auf, die die radiale Lagerfunktion übernehmen. In diesem Fall ist eine Wälzbewegung zwischen dem kreisförmigen Innenumfang des Verstellrings 9 und den als radiale Lagerflächen wirkenden kreisförmigen Konturabschnitten 22 der axialen Ansätze 14 gegeben.

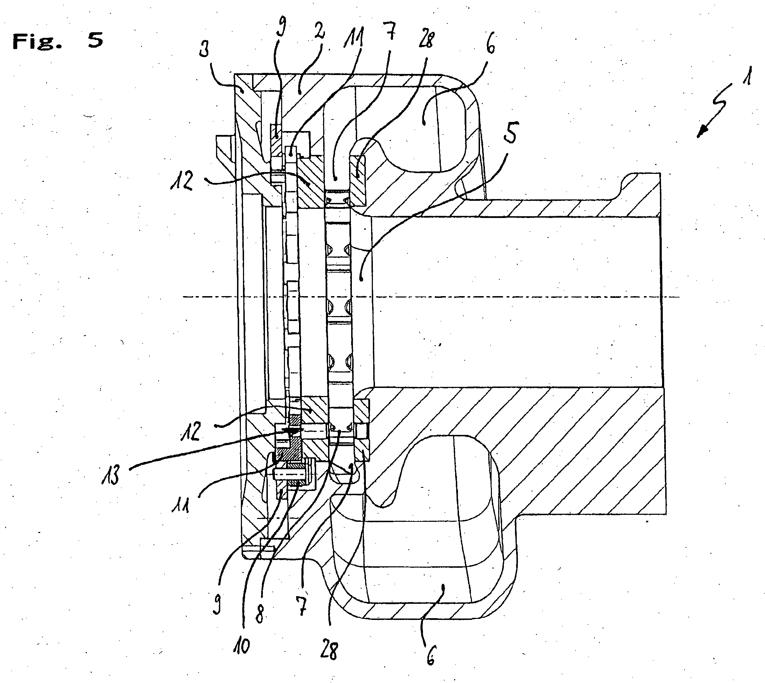

Der Aufbau eines zweiten Ausführungsbeispiels eines erfindungsgemäßen Abgasturboladers 1 ergibt sich aus der Figur 5.

Der dargestellte Abgasturbolader 1 gemäß der Erfindung umfasst ein Gehäuse bestehend aus einem Lagergehäuse 3 und einem Turbinengehäuse 2. In dem Lagergehäuse 3 ist eine hier nicht dargestellte Welle drehbar gelagert. Die Welle trägt an einem Ende ein Turbinenrad 5. Innerhalb des Turbinengehäuses 2 ist auf der Seite des Turbinenrads 5 eine Volute 6 gebildet, die in radialer Richtung in einen Ringkanal 7 übergeht.

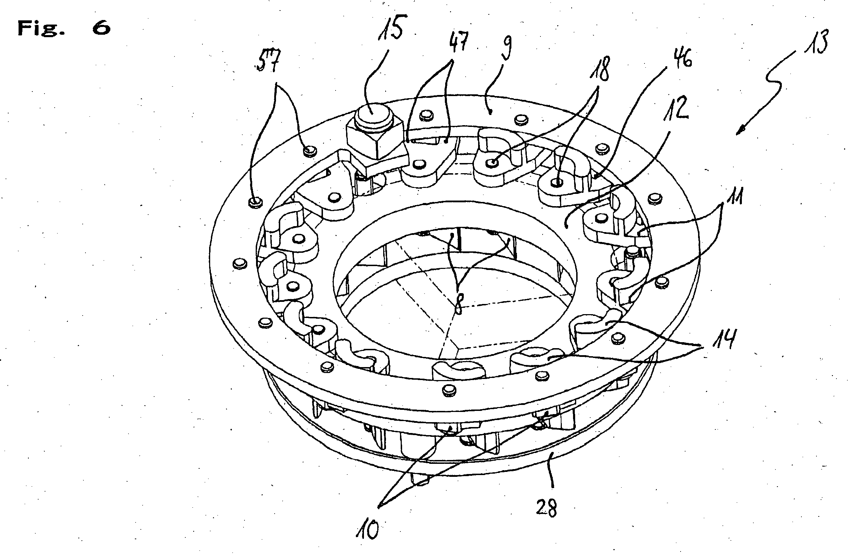

Der Abgasturbolader 1 umfasst einen aus unterschiedlichen Perspektiven in den Figuren 6 bis 8 dargestellten Leitapparat 13, welcher es ermöglicht, die Abgaseinströmung in die Turbine durch Variation der Turbinengeometrie einzustellen. Zu diesem Zweck sind wie im vorigen Ausführungsbeispiel im Ringkanal 7 verstellbare Leitschaufeln 8 angeordnet.

Die Leitschaufeln 8 sind an einem Schaufellagerring 12 und an einem Stütz- und Lagerring 28 drehbar gelagert und werden über einen (hier nicht dargestellten) Aktuator verstellt, der in hier nicht näher dargestellter Art und Weise auf einen Verstellring 9 einwirkt. Eine Drehbewegung des Verstellrings 9 in Bezug auf den Schaufellagerring 12 wird auf die Leitschaufeln 8 übertragen, die in der vorstehend beschriebenen Weise in einem vorgegebenen Drehbereich zwischen einer geöffneten und einer geschlossenen Position verstellt werden können.

Die Leitschaufeln 8 sind wie bei den vorstehend beschriebenen Ausführungsbeispielen an dem Schaufellagerring 12 mittels Schaufelzapfen 18 befestigt, welche den Schaufellagerring 12 axial durchsetzen, und die an ihren den Leitschaufeln 8 gegenüberliegenden Enden jeweils einen Schaufelhebel 11 tragen. Weiterhin sind die Leitschaufeln 8 an dem Stütz- und Lagerring 28 mittels in entsprechende Lagerbohrungen 49 eingreifende Schaufellagerzapfen 48 gelagert. Der Schaufellagerring 12 und der Stütz- und Lagerring 28 werden mittels mehrerer (vorliegend dreier) Distanzhalter 29 in einem vorgegebenen Abstand zueinander gehalten, welcher ein reibungsarmes Verdrehen der Leitschaufeln 8 ermöglicht. Die Distanzhalter 29 werden von Fixierschrauben 50 gehalten, so dass eine modulare Vormontage des Leitapparats 13 möglich ist.

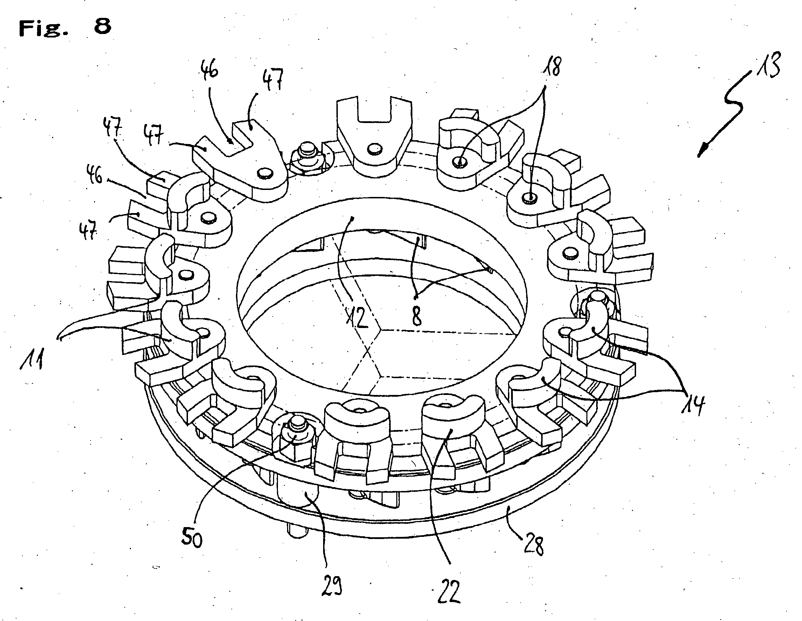

Aus der Figur 8 ergibt sich eine bevorzugte Ausgestaltung eines Schaufelhebels 11. Der dort dargestellte Schaufelhebel 11 umfasst einen Hebelarm 20, der einendseitig eine Aufnahmebohrung 19 für einen Schaufelzapfen 18 und andersendseitig zwei gabelförmig abstehende und eine Ausnehmung 46 zwischen sich einschließende Führungsarme 47 aufweist.

Der Verstellring 9, der zur gleichzeitigen Betätigung aller Schaufelhebel 11 dient, befindet sich in der darüber liegenden axialen Ebene der ringförmig angeordneten Schaufelhebel 11. Die dem Verstellring 9 zugewandte Fläche des Hebelarms 20 dient dabei als Auflage- und axiale Führungsfläche 23 für den Verstellring 9 (vgl. Figuren 5, 6 und 8).

Um die gleichzeitige Betätigung aller Schaufelhebel 11 zu bewerkstelligen, weist der Verstellring 9 Eingriffsmittel auf, die mit entsprechenden Eingriffsmitteln an jedem der Schaufelhebel 11 derart zusammenwirken, dass bei Verdrehung des Verstellrings 9 in Bezug auf den Schaufellagerring 12 alle Schaufelhebel 11, und mit ihnen die Leitschaufeln 8, gleichzeitig verschwenkt werden. Der Verstellring 9 trägt als Betätigungsmittel einen mit dem Aktuator in Wirkverbindung stehenden Aktuatorzapfen 15, um den Verstellring 9 von außerhalb des Gehäuses steuern zu können (vgl. Figur 6).

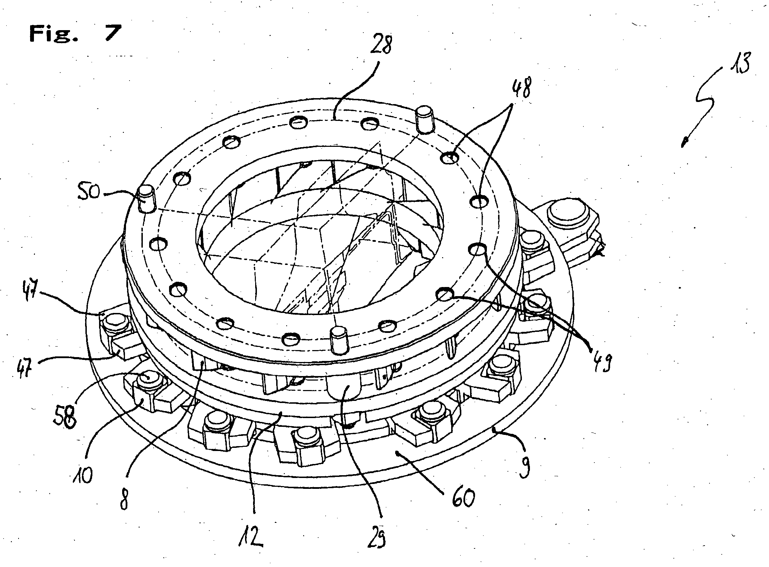

Die Eingriffsmittel umfassen hier entsprechend der Darstellung in der Figur 7 quader- bzw. würfelförmige Kulissen- oder Gleitsteine 10 mit einer (hier nicht sichtbaren) Zentralbohrung. In die Zentralbohrung eines jeweiligen Kulissen- oder Gleitsteins 10 ist ein axial von dem Verstellring 9 abstehender in der Figur 6 von der Rückseite sichtbarer Verstellringzapfen 57 gesteckt, so dass eine Seite des Quaders oder Würfels 10 auf der axialen in Richtung der Leitschaufeln 8 weisenden Ringfläche 60 des Verstellrings 9 aufsitzt. Die Kulissen- oder Gleitsteine 10 greifen in die entsprechenden radial nach außen verlaufenden Kulissensteinführungen bildenden Ausnehmungen 46 der Schaufelhebel 11 ein. Die Verstellringzapfen 57 sind im vorliegenden Ausführungsbeispiel mit einem Bund 58 ausgeführt. Der Bund 58 dient als axiale Halterung und Führung der Gleit- oder Kulissensteine 10.

Auch bei dieser Ausführungsvariante ist der Verstellring 9 über die Schaufelhebel 11 in radialer Richtung abgestützt. Diese Abstützung bildet ein Lager, welches Drehbewegungen des Verstellrings 9 gegenüber dem Schaufellagerring 12 ermöglicht. Die Schaufelhebel 11 weisen zu diesem Zweck axiale Ansätze 14 auf, die die radiale Lagerfunktion übernehmen. In diesem Fall ist eine Wälzbewegung zwischen dem kreisförmigen Innenumfang des Verstellrings 9 und den als radiale Lagerflächen wirkenden kreisförmigen Konturabschnitten 22 der axialen Ansätze 14 gegeben.

### Bezugszeichenliste

- 1: Abgasturbolader
- 2: Turbinengehäuse
- 3: Lagergehäuse
- 4: Welle
- 5: Turbinenrad
- 6: Volute
- 7: Ringkanal
- 8: Leitschaufel
- 9: Verstellring
- 10: Kulissenstein
- 11: Schaufelhebel
- 12: Schaufellagerring
- 13: Leitapparat
- 14: axialer Ansatz
- 15: Aktuatorzapfen
- 16: radial verlaufende Ausnehmung
- 17: Hebelzapfen
- 18: Schaufelzapfen
- 19: Aufnahmebohrung
- 20: Hebelarm
- 21: Hebelkopf
- 22: Konturabschnitt
- 23: axiale Führungsfläche
- 24: Scheibe
- 25: Formschlüß
- 26: Kulissensteinoberfläche
- 27: Verstellringoberfläche
- 28: Stütz- und Lagerring
- 29: Distanzhalter
- 30: Käfig
- 31: Wälzkörper
- 32: Aktuator
- 33: Verdichterrad
- 46: Ausnehmung
- 47: Führungsarm
- 48: Schaufellagerzapfen
- 49: Lagerbohrung
- 50: Fixierschraube
- 57: Verstellringzapfen
- 58: Bund (Kopf)
- 59: Zentralbohrung
- 60: Ringfläche

## Patentansprüche

1. Leitapparat (13) eines Abgasturboladers (1),
mit einem Ring von Leitschaufeln (8), die mittels Schaufelzapfen (18) an einem Schaufellagerring (12) drehbar gelagert sind, wobei die Schaufelzapfen (18) jeweils verdrehfest mit einem Schaufelhebel (11) verbunden sind, wobei die Schaufelhebel (11) Schaufelhebeleingriffsmittel (17, 10; 46, 47) aufweisen, welche mit Verstellringeingriffsmitteln (16; 10, 57) eines gegenüber dem Schaufellagering (12) drehbaren Verstellrings (9) derart in Wirkverbindung stehen, dass bei Verdrehung des Verstellrings (9) in Bezug auf den Schaufellagerring (12) alle Schaufelhebel (11), und mit ihnen die Leitschaufeln (8), gleichzeitig verdreht werden,
wobei der Verstellring (9) an axialen Ansätzen (14) mehrerer der Schaufelhebel (11) radial abgestützt gelagert ist, **dadurch gekennzeichnet, dass** wenigstens eines der Schaufelhebeleingriffsmittel einen in einen Kulissenstein (10) eingreifenden Hebelzapfen (17) aufweist und dass das zu diesem wenigstens einen Schaufelhebeleingriffsmittel korrespondierende Verstellringeingriffsmittel eine Ausnehmung (16) aufweist, in welcher der Kulissenstein (10) verschieblich geführt ist und/oder dass wenigstens eines der Verstellringeingriffsmittel einen in einen Kulissenstein (10) eingreifenden Verstellringzapfen (57) aufweist und dass das zu diesem wenigstens einen Verstellringeingriffsmittel korrespondierende Schaufelhebeleingriffsmittel eine Ausnehmung (46) aufweist, in welcher der Kulissenstein (10) verschieblich geführt ist.

2. Leitapparat (13) nach Anspruch 1,
**dadurch gekennzeichnet, dass**
- die Schaufelhebel (11) einen nach radial außen gerichteten Hebelarm (20) aufweisen, von welchem der Hebelzapfen (17) axial absteht und/oder dass
- der Verstellringzapfen (57) axial absteht.

3. Leitapparat (13) nach Anspruch 1 oder 2,
**dadurch gekennzeichnet, dass**
- auf wenigstens drei der Hebelzapfen (17), vorzugsweise auf allen Hebelzapfen (17), eine den entsprechenden Kulissenstein (10) einschließende und den Verstellring (9) im Bereich der korrespondierenden Ausnehmung (16) übergreifende Scheibe (24) vorgesehen ist und/oder dass
- die Hebelzapfen (17) und/oder die Verstellringzapfen (57) eine Verdickung (58) aufweisen, welcher den entsprechenden Kulissenstein (10) verliersicher hält.

4. Leitapparat (13) nach einem der vorangegangenen Ansprüche,
**dadurch gekennzeichnet, dass** ein Stütz-/Lagerring (28) vorgesehen ist, wobei die Leitschaufeln (8) axial zwischen dem Schaufelllagering (12) und dem Stütz-/Lagerring (28) angeordnet und an diesen drehbar gelagert sind und dass axial zwischen dem Stütz-/Lagerring (28) und dem Schaufelllagerring (12) wenigstens drei den Stütz-/Lagerring (28) und den Schaufelllagerring (12) zwangsdistanzierende und zusammen halternde Distanzhalter (29) vorgesehen sind.

5. Abgasturbolader (1) aufweisend einen Leitapparat (13) gemäß zumindest einem der Ansprüche 1 bis 4, mit einem Ring von Leitschaufeln (8), die mittels Schaufelzapfen (18) an einem Schaufellagerring (12) drehbar gelagert sind, wobei die Schaufelzapfen (18) jeweils verdrehfest mit einem Schaufelhebel (11) verbunden sind, wobei die Schaufelhebel (11) Schaufelhebeleingriffsmittel (17, 10; 46, 47) aufweisen, welche mit Verstellringeingriffsmitteln (16; 10, 57) eines gegenüber dem Schaufellagering (12) drehbaren Verstellrings (9) derart in Wirkverbindung stehen, dass bei Verdrehung des Verstellrings (9) in Bezug auf den Schaufellagerring (12) alle Schaufelhebel (11), und mit ihnen die Leitschaufeln (8), gleichzeitig verdreht werden, wobei der Verstellring (9) an axialen Ansätzen (14) mehrerer der Schaufelhebel (11) radial abgestützt gelagert ist,
**dadurch gekennzeichnet, dass**
- wenigstens eines der Schaufelhebeleingriffsmittel einen in einen Kulissenstein (10) eingreifenden Hebelzapfen (17) aufweist und dass das zu diesem wenigstens einen Schaufelhebeleingriffsmittel korrespondierende Verstellringeingriffsmittel eine Ausnehmung (16) aufweist, in welcher der Kulissenstein (10) verschieblich geführt ist und/oder dass
- wenigstens eines der Verstellringeingriffsmittel einen in einen Kulissenstein (10) eingreifenden Verstellringzapfen (57) aufweist und dass das zu diesem wenigstens einen Verstellringeingriffsmittel korrespondierende Schaufelhebeleingriffsmittel eine Ausnehmung (46) aufweist, in welcher der Kulissenstein (10) verschieblich geführt ist.

6. Leitapparat (13) nach einem der Ansprüche 1 bis 4,
**dadurch gekennzeichnet, dass** der Verstellring (9), die Leitschaufeln (8), die Schaufelhebel (11), der Schaufellagerring (12) und die Kulissensteine (10) eine eigenständige, vormontierbare Baugruppe bilden.

7. Leitapparat (13) nach Anspruch 6,
**dadurch gekennzeichnet, dass** ein Stütz-/Lagerring (28) für die Leitschaufeln (8) vorgesehen ist, welcher Bestandteil der eigenständigen, vormontierbaren Baugruppe ist.

## Claims

1. Guide apparatus (13) of an exhaust-gas turbocharger (1),
having a ring of guide vanes (8) which are rotatably mounted by way of vane journals (18) on a vane bearing ring (12), wherein the vane journals (18) are each connected rotationally conjointly to a vane lever (11),
wherein the vane levers (11) have vane lever engagement means (17, 10; 46, 47) which are operatively connected to adjustment ring engagement means (16; 10, 57) of an adjustment ring (9) which is rotatable relative to the vane bearing ring (12), said operative connection being such that, when the adjustment ring (9) rotates relative to the vane bearing ring (12), all of the vane levers (11), and with them the guide vanes (8), are rotated simultaneously,
wherein the adjustment ring (9) is mounted so as to be supported radially on axial projections (14) of several of the vane levers (11),
**characterized in that**
at least one of the vane lever engagement means has a lever journal (17) which engages into a sliding block (10), and **in that** the adjustment ring engagement means corresponding to said at least one vane lever engagement means has a recess (16) in which the sliding block (10) is displaceably guided, and/or **in that** at least one of the adjustment ring engagement means has an adjustment ring journal (57) which engages into a sliding block (10), and **in that** the vane lever engagement means corresponding to said at least one adjustment ring engagement means has a recess (46) in which the sliding block (10) is displaceably guided.

2. Guide apparatus (13) according to Claim 1, **characterized in that**
- the vane levers (11) have a radially outwardly oriented lever arm (20) from which the lever journal (17) protrudes axially, and/or **in that**
- the adjustment ring journal (57) protrudes axially.

3. Guide apparatus (13) according to Claim 1 or 2, **characterized in that**,
- on at least three of the lever journals (17), preferably on all of the lever journals (17), there is provided a disc (24) which encloses the corresponding sliding block (10) and which engages over the adjustment ring (9) in the region of the corresponding recess (16), and/or **in that**
- the lever journals (17) and/or the adjustment ring journals (57) have a thickened portion (58) which captively holds the corresponding sliding block (10).

4. Guide apparatus (13) according to one of the preceding claims,
**characterized in that**
a support/bearing ring (28) is provided, wherein the guide vanes (8) are arranged axially between the vane bearing ring (12) and the support/bearing ring (28) and are mounted rotatably thereon, and **in that**, axially between the support/bearing ring (28) and the vane bearing ring (12), there are provided at least three spacers (29) which positively space apart, and hold together, the support/bearing ring (28) and the vane bearing ring (12).

5. Exhaust-gas turbocharger (1) having a guide apparatus (13) according to at least one of Claims 1 to 4, having a ring of guide vanes (8) which are mounted rotatably by way of vane journals (18) on a vane bearing ring (12), wherein the vane journals (18) are connected in each case rotationally conjointly to a vane lever (11), wherein the vane levers (11) have vane lever engagement means (17, 10; 46, 47) which are operatively connected to adjustment ring engagement means (16; 10, 57) of an adjustment ring (9) which is rotatable relative to the vane bearing ring (12), said operative connection being such that, when the adjustment ring (9) rotates relative to the vane bearing ring (12), all of the vane levers (11), and with them the guide vanes (8), are rotated simultaneously, wherein the adjustment ring (9) is mounted so as to be supported radially on axial projections (14) of several of the vane levers (11),
**characterized in that**
- at least one of the vane lever engagement means has a lever journal (17) which engages into a sliding block (10), and **in that** the adjustment ring engagement means corresponding to said at least one vane lever engagement means has a recess (16) in which the sliding block (10) is displaceably guided, and/or **in that**
- at least one of the adjustment ring engagement means has an adjustment ring journal (57) which engages into a sliding block (10), and **in that** the vane lever engagement means corresponding to said at least one adjustment ring engagement means has a recess (46) in which the sliding block (10) is displaceably guided.

6. Guide apparatus (13) according to one of Claims 1 to 4,
**characterized in that**
the adjustment ring (9), the guide vanes (8), the vane levers (11), the vane bearing ring (12) and the sliding blocks (10) form an independent, pre-assemblable assembly.

7. Guide apparatus (13) according to Claim 6, **characterized in that**
a support/bearing ring (28) for the guide vanes (8) is provided, which support/bearing ring is a constituent part of the independent, pre-assemblable assembly.

## Revendications

1. Distributeur (13) pour turbocompresseur à gaz d'échappement (1), comprenant un anneau d'aubes directrices (8) qui sont supportées à rotation au moyen de tourillons d'aubes (18) sur un anneau de palier d'aubes (12), les tourillons d'aubes (18) étant à chaque fois connectés de manière solidaire en rotation à un levier d'aube (11),
les leviers d'aubes (11) présentant des moyens d'engagement de levier d'aubes (17, 10 ; 46, 47), qui sont en liaison fonctionnelle avec des moyens d'engagement d'anneau de réglage (16 ; 10, 57) d'un anneau de réglage (9) pouvant tourner par rapport à l'anneau de palier d'aubes (12) de telle sorte que lors de la rotation de l'anneau de réglage (9) par rapport à l'anneau de palier d'aubes (12), tous les leviers d'aubes (11), et avec eux les aubes directrices (8), soient tournés simultanément,
l'anneau de réglage (9) étant supporté radialement au niveau de pièces axiales (14) de plusieurs des leviers d'aubes (11),
**caractérisé en ce que**
au moins l'un des moyens d'engagement de levier d'aubes présente un tourillon de levier (17) s'engageant dans un coulisseau (10) et **en ce que** le moyen d'engagement d'anneau de réglage correspondant à cet au moins un moyen d'engagement de levier d'aubes présente un évidement (16), dans lequel le coulisseau (10) est guidé de manière déplaçable et/ou
**en ce qu'**au moins l'un des moyens d'engagement d'anneau de réglage présente un tourillon d'anneau de réglage (57) s'engageant dans un coulisseau (10) et **en ce que** le moyen d'engagement de levier d'aubes correspondant à cet au moins un moyen d'engagement d'anneau de réglage présente un évidement (46), dans lequel le coulisseau (10) est guidé de manière déplaçable.

2. Distributeur (13) selon la revendication 1, **caractérisé en ce que**
- les leviers d'aubes (11) présentent un bras de levier (20) orienté radialement vers l'extérieur, depuis lequel le tourillon de levier (17) fait saillie axialement et/ou **en ce que**
- le tourillon d'anneau de réglage (57) fait saillie axialement.

3. Distributeur (13) selon la revendication 1 ou 2, **caractérisé en ce que**
- sur au moins trois des tourillons de levier (17), de préférence sur tous les tourillons de levier (17), est prévu un disque (24) entourant le coulisseau correspondant (10) et venant en prise par le dessus avec l'anneau de réglage (9) dans la région de l'évidement correspondant (16) et/ou **en ce que**
- les tourillons de levier (17) et/ou les tourillons d'anneau de réglage (57) présentent un épaississement (58) qui retient de manière imperdable le coulisseau correspondant (10).

4. Distributeur (13) selon l'une quelconque des revendications précédentes,
**caractérisé en ce que**
un anneau de support/de palier (28) est prévu, les aubes directrices (8) étant disposées axialement entre l'anneau de palier d'aubes (12) et l'anneau de support/de palier (28) et étant supportées de manière rotative sur ceux-ci, et **en ce qu'**axialement entre l'anneau de support/de palier (28) et l'anneau de palier d'aubes (12) sont prévus au moins trois éléments d'espacement (29) retenant ensemble et à distance forcée l'un de l'autre l'anneau de support/de palier (28) et l'anneau de palier d'aubes (12).

5. Turbocompresseur à gaz d'échappement (1) présentant un distributeur (13) selon au moins l'une de quelconque des revendications 1 à 4, comprenant un anneau d'aubes directrices (8) qui sont supportées à rotation au moyen de tourillons d'aubes (18) sur un anneau de palier d'aubes (12), les tourillons d'aubes (18) étant à chaque fois connectés de manière solidaire en rotation à un levier d'aube (11), les leviers d'aubes (11) présentant des moyens d'engagement de levier d'aubes (17, 10 ; 46, 47), qui sont en liaison fonctionnelle avec des moyens d'engagement d'anneau de réglage (16 ; 10, 57) d'un anneau de réglage (9) pouvant tourner par rapport à l'anneau de palier d'aubes (12) de telle sorte que lors de la rotation de l'anneau de réglage (9) par rapport à l'anneau de palier d'aubes (12), tous les leviers d'aubes (11), et avec eux les aubes directrices (8), soient tournés simultanément, l'anneau de réglage (9) étant supporté radialement au niveau de pièces axiales (14) de plusieurs des leviers d'aubes (11),
**caractérisé en ce que**
- au moins l'un des moyens d'engagement de levier d'aubes présente un tourillon de levier (17) s'engageant dans un coulisseau (10) et **en ce que** le moyen d'engagement d'anneau de réglage correspondant à cet au moins un moyen d'engagement de levier d'aubes présente un évidement (16), dans lequel le coulisseau (10) est guidé de manière déplaçable et/ou **en ce que**
- au moins l'un des moyens d'engagement d'anneau de réglage présente un tourillon d'anneau de réglage (57) s'engageant dans un coulisseau (10) et **en ce que** le moyen d'engagement de levier d'aubes correspondant à cet au moins un moyen d'engagement d'anneau de réglage présente un évidement (46), dans lequel le coulisseau (10) est guidé de manière déplaçable.

6. Distributeur (13) selon l'une quelconque des revendications 1 à 4,
**caractérisé en ce que**
l'anneau de réglage (9), les aubes directrices (8), les leviers d'aubes (11), la bague de palier d'aubes (12) et les coulisseaux (10) forment un module autonome pouvant être prémonté.

7. Distributeur (13) selon la revendication 6,
**caractérisé en ce que**
un anneau de support/de palier (28) est prévu pour les aubes directrices (8), lequel fait partie du module autonome pouvant être prémonté.
